(19)

Europäisches
Patentamt
European
Patent Office
Office européen
des brevets

(11) **EP 4 310 733 A1**

(12) **EUROPEAN PATENT APPLICATION**

(43) Date of publication:
**24.01.2024 Bulletin 2024/04**

(21) Application number: **22186414.3**

(22) Date of filing: **22.07.2022**

(51) International Patent Classification (IPC):
**G06N 3/065** (2023.01)    **G06N 3/049** (2023.01)

(52) Cooperative Patent Classification (CPC):
**G06N 3/065; G06N 3/049**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fraunhofer-Gesellschaft zur Förderung
der angewandten Forschung e.V.
80686 München (DE)**

(72) Inventors:
• **Herzer, Elmar
91058 Erlangen (DE)**
• **Leugering, Johannes
91058 Erlangen (DE)**

(74) Representative: **Gagel, Roland et al
Patentanwalt Dr. Roland Gagel
Landsberger Strasse 480a
81241 München (DE)**

(54) **MATCHED FEEDBACK INTEGRATE-AND-FIRE NEURON CIRCUIT**

(57)     The present invention relates to an integrate-and-fire neuron circuit for signed processing which is characterized by a feedback subcircuit connected to the positive and negative outputs of the circuit. This feedback subcircuit is configured to generate and output positive charge packets to a common line of the neuron circuit on each negative spike output signal and stored weights and to generate and output negative charge packets to the common line based on each positive spike output signal and stored weights. Due to this feedback circuit that is build in the same way as the input weighting circuit, structural matching and therefore higher accuracy and less variation of the behavior over PVT variations is achieved.

Fig. 1

EP 4 310 733 A1

Processed by Luminess, 75001 PARIS (FR)

## Description

### Technical field

The present invention relates to an integrate-and-fire neuron circuit comprising at least one input to receive input signals and at least a positive and a negative output to deliver positive and negative spike output signals, a weighting subcircuit configured to generate and output positive and/or negative charge packets to a common line based on the input signals and an arrangement of a capacitor or integrator and two comparators generating the positive spike output signals at the positive output and the negative spike output signals at the negative output.

Such circuits for roughly imitating the function of a neuron are used in artificial neuronal networks (ANN), especially artificial spiking neuronal networks (SNN). Neuronal dynamics can be seen as a summation process combined with a mechanism that triggers action potentials above some critical voltage. One known representation of a neuron circuit is the integrate-and-fire neuron circuit. Information is contained in the presence or absence of a spike which is generated with such a neuron circuit.

### Prior art

R. Serrano-Gotarredona et al., "A Neuromorphic Cortical-Layer Microchip for Spike-Based Event Processing Vision Systems," in IEEE Transactions on Circuits and Systems I: Regular Papers, vol. 53, no. 12, pp. 2548-2566, Dec. 2006, propose integrate-and-fire neuron circuits for signed and unsigned processing. These circuits comprise subcircuits for generating positive and/or negative charge packets and output these charge packets to a common line based on input signals. The charges of the positive and negative charge packets are stored in a capacitor converting the sum of charges into a voltage. The voltage is compared with a reference voltage by a comparator which generates a positive and/or negative spike output signal if the voltage is larger or lower than the corresponding reference voltage. The circuit performs a reset that clears all charge on the capacitor when an output spike is created. While this reset is performed, continuing inputs can be lost (blind period). Since the reset removes all information on previous operation there is also no quantization error stored. Averaging over multiple operations of the same kind would not reveal more resolution and accuracy in averaged results. Here the amount, how much the voltage exceeds the reference voltage can be considered as the quantization error. The overall gain of such a neuron circuit depends on the absolute values of the capacitor, the input current and the reference voltage. Therefore, the result will vary heavily with temperature, process and supply variations, also known as PVT-variations (PVT: process-voltage-temperature).

EP 2877958 B1 describes a spike domain asynchronous neuron circuit with feedback. The feedback is realized as proportional feedback, continuously in value and time, and influences the adjustable gain subcircuits of this neuron circuit.

It is an object of the present invention to provide an integrate-and-fire neuron circuit which provides higher accuracy and less variation in case of temperature, process and supply variations (PVT-variations).

### Summary of the invention

The object is achieved with the integrate-and-fire neuron circuit according to claim 1. Advantageous embodiments of the circuit are subject of the dependent claims or may be deduced from the subsequent description and exemplary embodiment.

The proposed circuit comprises at least one input to receive input signals and at least a positive and a negative output to deliver positive and negative spike output signals. The input signals maybe spiking signals but may also be pulse width-modulated (pwm) or static signals. The circuit further comprises a weighting subcircuit configured to generate and output positive and/or negative charge packets to a common line of the neuron circuit based on the input signals and stored weights. A capacitance between the common line and a reference potential stores the charges from the positive and negative charge packets and converts the sum of the charges into a voltage. This capacitance can be formed of a capacitor connected between the common line and a reference potential but can also be an intrinsic (or parasitic) capacitance between the common line and at least one supply voltage or ground potential (as a reference potential) caused by the elements and wiring of the circuit. Instead of the capacitance an integrator can also be used to sum up the charges of the positive and negative charge packets and to convert the sum of the charges into a voltage. A first comparator compares this voltage against an upper reference voltage for quantization and is configured to generate the positive spike output signals at the positive output, while said voltage is larger than the upper reference voltage. A second comparator compares said voltage against a lower reference voltage for quantization and is configured to generate the negative spike output signals at the negative output, while said voltage is smaller than the lower reference voltage. The above components enable the circuit to realize signed processing, i.e., processing with positive and with negative weights as known in the art, for example from the above publication of R. Serrano-Gotarredona et al. The proposed neuron circuit is characterized by a feedback subcircuit connected to the positive and negative outputs. This feedback subcircuit is configured to generate and output positive charge packets to the common line based on each negative spike output signal (and stored weights) and to generate and output negative charge packets to the common line based on each positive spike output signal (and stored weights). In the proposed neuron circuit thus, the feedback based on the generated spike output signals is not used to reset the capacitance, but to feedback charge packets of opposite sign. The feedback subcircuit is build in the same way as the input weighting subcircuit. Due to this feedback subcircuit the input is taking information all the time and does not have any blind period. Furthermore, since there is no complete reset of the capacitance after each spike output, an accumulation of the quantization error (difference between upper/lower reference voltage and summed up voltage) and also a more exact compensation of the output is achieved. This and the integration on the next stage, the following integrate-and-fire neuron circuit, will reduce noise an improve accuracy, because averaging then becomes more meaningful. It is possible to wait longer for more accuracy in the calculated results because then the quantization errors of the previous operations will add up or compensate during the longer period. As will be shown later in connection with the exemplary embodiment, the voltage gain between two of these neuron circuits does only depend on the weight ratio and the capacitor ratio and not from the absolute current value and absolute pulse width. Therefore, using structural matching in preferred embodiments the proposed neuron circuit provides higher accuracy and less variation of the behavior over PVT variations. Structural matching means that functional blocks or functional units which are intended to do the same are all implemented in the same structural and physical way from the same subblocks, parts and/or elements. Functional blocks or functional units that need to do the opposite (e.g. compensate a positive current by a negative current) are implemented in a complementary structure from complementary elements (e.g. NMOS instead of PMOS transistors in a mirrored arrangement). Namely - in the preferred configurations of the circuit described later - all P-AWE are built as multiple instantiations of one block, as well as all N-AWE are built from multiple instantiations of a second block and also their subparts, which are mainly the current sources and switches inside, where N-AWE contains complementary elements that are arranged in a complementary structure to P_AWE. This implies that all the functional blocks or units will vary in the same manner with PVT and therefore the influence of this variation cancels out in overall behaviour. With the present invention a digitally configurable (leaky) integrate-and-fire neuron is proposed which can be used for mixed-signal spiking neuronal networks.

The proposed feedback enables the usage of local clocking created by small circuits. The highly variable pulse width and period from such a small circuit does not influence multistage accuracy because there is only one clock source for the consideration of the same charge packet in the sending and receiving circuit. The information in pulse width compensates for the non-ideal circuitry. The proposed feedback also gives the opportunity to calculate the result in a short period of time roughly or to count output spikes over multiple periods of time with the same input spike density and yield a higher accuracy for the same operation, because the rest of previous calculations is not removed and therefore adds up over time. The special implementation relies on structural matching of the parts and makes the circuit accuracy less dependent of variations of bias current and capacitance caused by production or environmental influences.

In the following, preferred embodiments of the proposed neuron circuit are described. These embodiments may also be combined. In a first embodiment, the weighting subcircuit comprises at least one, preferably a multiplicity of first positive analog weight emulators (P-AWE) each configured to generate and output a positive charge packet to the common line when enabled by a first enabling signal in combination with an additional enabling signal. The additional enabling signal is provided based on the desired weight. The subcircuit also comprises at least one, preferably a multiplicity of first negative analog weight emulators (N-AWE) each configured to generate and output a negative charge packet to the common line when enabled by a first enabling signal in combination with an additional enabling signal (depending on the desired weight). An input signal interface of the weighting subcircuit receives the input signals and generates the first enabling signals, based on the input signals, for the first positive and negative analog weight emulators.

In a further embodiment, also the feedback subcircuit comprises at least one, preferably a multiplicity of (second) positive analog weight emulators each configured to generate and output a positive charge packet to the common line when enabled by a second enabling signal in combination with an additional enabling signal, at least one, preferably a multiplicity of (second) negative analog weight emulators each configured to generate and output a negative charge packet to the common line when enabled by a second enabling signal in combination with an additional enabling signal. A feedback signal interface of the feedback subcircuit is connected to the positive and negative outputs of the neuron circuit and configured to generate the second enabling signals for the second positive analog weight emulators based on each negative spike output signal, and to generate the second enabling signals for the second negative analog weight emulators based on each positive spike output signal. Preferably, the first and/or second positive and negative analog weight emulators of one or both above embodiments each have a memory or are connected to a memory storing the weights based on which the additional enabling signals are provided.

Preferably the first and/or second positive and negative analog weight emulators of the above embodiments each comprise a switched current source for generating the charge packets. The neuron circuit may also comprise a common bias circuit to bias these switched current sources of at least one of the first and second positive and negative analog weight emulators.

In a further embodiment, the neuron circuit comprises a reference voltage generator to generate the reference potential, the upper reference voltage and the lower reference voltage, preferably using positive and negative analog weight emulators and capacitors.

In a further embodiment, the proposed neuron circuit comprises an offset subcircuit for generating an offset to the created charge packages. This offset subcircuit includes at least one, preferably a multiplicity of third positive analog weight emulators each configured to generate and output a positive charge packet to the common line when enabled by a third enabling signal in combination with an additional enabling signal, and at least one, preferably a multiplicity of third negative analog weight emulators each configured to generate and output a negative charge packet to the common line when enabled by a third enabling signal in combination with an additional enabling signal. The third enabling signals are generated by a digital spike generator which is connected to the third positive and negative analog weight emulators. This spike generator generates digital spike signals based on a received digital offset value, wherein the digital spike signals represent the third enabling signals for the third positive and negative analog weight emulators.

The proposed neuron circuit can be advantageously used in spiking neuronal networks or in interfaces between non-spiking and spiking neuron networks.

## Short description of the drawings

The proposed neuron circuit is described in the following by way of example in connection with the corresponding figures. The figures show:

Fig. 1    an exemplary embodiment of the proposed neuron circuit;

Fig. 2    an example of cascading two neuron circuits of the prior art; and

Fig. 3    an example of cascading two neuron circuits according to the present invention.

## Detailed description of embodiments

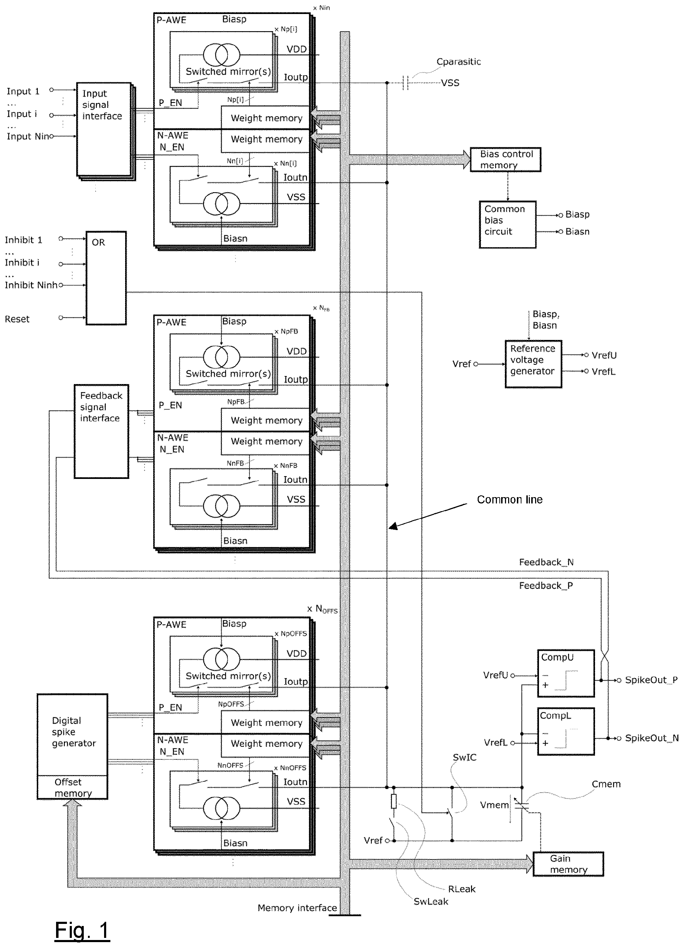

An exemplary embodiment of the proposed neuron circuit including several optional components is schematically depicted in figure 1. This figure shows on the left side the weighting subcircuit, the feedback subcircuit and the offset subcircuit. On the right hand side, the optional common bias circuit and the optional reference voltage generator are indicated as well as the comparators and the capacitor (Cmem). The different memories indicated in figure 1 are connected to a memory interface as indicated by the broad line with arrows.

The input signals are received at the corresponding inputs Input i (i = 1 ... N) of an input signal interface. Each of it is enabling at least one of a multiplicity of positive analog weight emulators (P-AWE) and of a multiplicity of negative analog weight emulators (N-AWE) via the interface which receives the input signals and generates the enabling signals (P_EN, N_EN). The positive analog weight emulators (P-AWE) generate positive charge packets (add charge) from input spikes (input signals) and have a weight memory to hold additional enabling data influencing the number of activating currents depending on the stored weights. The negative analog weight emulators (N-AWE) to generate negative charge packets (remove charge) from input spikes and comprise also a weight memory to hold additional enabling data influencing the number of activating currents depending on the stored weights. The currents or charge packages are generated by switched current sources in the emulators of this weighting subcircuit and fed to a common line of the neuron circuit as depicted in figure 1.

A capacitor Cmem in parallel to a parasitic capacitance Cparasitic and connected to the common line stores the charges created by the P-AWE and N-AWE and converts the sum of charges into a voltage Vmem. The capacitor Cmem might be modified in size by a digital value, stored in a memory (gain memory). Instead of the capacitor, the capacitance Cparasitic can also be used to store and convert the charges into the voltage Vmem. Alternatively, the capacitor Cmem of figure 1 can be replaced by an integrator made from an OpAmp and another capacitor to integrate the charges and generate the voltage Vmem. The circuit further comprises a first comparator (CompU) to compare Vmem against an upper reference voltage VRefU and to generate spikes SpikeOUT_P on the positive output, while Vmem is larger than VRefU, and a second comparator (CompL) to compare Vmem against a lower reference voltage VRefL and to generate spikes SpikeOUT_N on the negative output, while Vmem is smaller than VRefL.

A positive feedback signal (Feedback_P) is derived from SpikeOUT_N in a feedback signal interface of the feedback subcircuit, which enables another multiplicity of positive analog weight emulators (P-AWE). A negative feedback signal (Feedback_N) is derived from SpikeOUT_P in the feedback signal interface, which enables another multiplicity of negative analog weight emulators (N-AWE). As in the case of the above weighting subcircuit the emulators comprise means to store the weights in or near the analog weight emulators (Weight memory) that might be SRAM cells or NVM cells.

The neuron circuit of figure 1 also comprises an offset subcircuit having a digital spike generator to generate spikes from a digital offset input (offset memory). The digital spike generator is wired to at least one positive analog weight emulator (P-AWE) having the same or different multiplicity as for the input spikes and at least one negative analog weight emulator (N-AWE) having same or different multiplicity as for the input spikes. These analog weight emulators generate positive and negative charge packets fed to the common line to be treated as additional input spiking signals.

Further (optional) components of the neuron circuit of figure 1 are a common bias circuit, a reference voltage generator, an additional switch SwIC and a combination of a resistor Rleak and a switch SwLeak. The common bias circuit generates and feeds a bias (Biasp, Biasn) to the switched current sources of the N-AWEs and P-AWEs. The reference voltage generator generates the upper and lower reference voltages VRefU and VRefL versus Vref. These reference voltages may be created from currents using N-AWE and P-AWE circuits and capacitors, for making the comparator limits dependent on the absolute value of the bias current and therefore making the overall gain independent of the absolute value of the bias current. The switch SwIC is used to set an initial condition on the capacitor Cmem when a Reset input is active or one of at least one optional Inhibit inputs is activated. The resistor Rleak and the switch SwLeak are implemented to create a defined leaky integrator behavior, where the resistor can also be implemented as a switched capacitor.

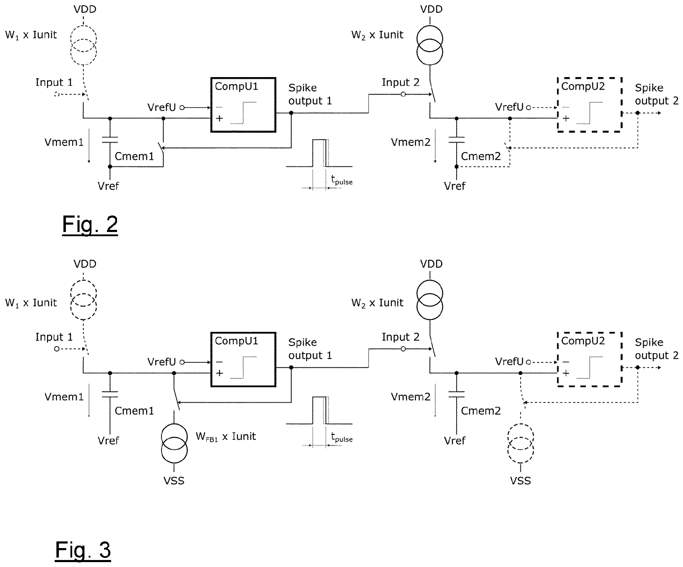

The most important advantage of the proposed neuron circuit arises when cascading the neurons (neuron circuits). Figures 2 and 3 show a comparison between the prior art (figure 2) and the proposed invention (figure 3) where inactive parts are omitted and parts that precede or follow the focused parts are shown using dashed lines. Both examples show a series of two neuron circuits, with the capacitors Cmem1 and Cmem2 and the corresponding current sources and comparators. In both figures the fire feedback of the first stage and the pulse reception in the second stage can be recognized. In the system of figure 2 according to the prior art, when the first neuron fires a pulse, the charge removed from the first capacitor Cmem1 in the first stage is at least

$$\texttt{Qremove1 = (VrefU-Vref) * Cmem1}$$

while in the second stage the charge added to the second stage's capacitor Cmem2 is

$$\texttt{Qadd2 = W2 * Iunit * tpulse * Cmem2}$$

The ratio of Qadd2/Qremove1, which is the voltage gain from Vmem1 to Vmem2 of the circuit, is depending on the ratio of absolute weight value W2, absolute current value Iunit and absolute pulse width tpulse over absolute voltage times a capacitance ratio.

On the other hand, in the system according to the present invention according to figure 3, when the first neuron fires a pulse, the charge removed from the first capacitor Cmem1 in the first stage is exactly and not more than

$$\texttt{Qremove1 = W1 * Iunit * tpulse * Cmem1}$$

while in the second stage the charge added to the second stage's capacitor Cmem2 is still

$$\texttt{Qadd2 = W2 * Iunit * tpulse * Cmem2}$$

Therefore, the gain Qadd2/Qremove1 depends on a weight ratio W2/W1 and a capacitor ratio Cmem2/Cmem1 which are quite exact (e.g. 0.1%), when realized with the same unit circuits, although the absolute value of each capacitor varies in a larger range (e.g. 20%). Iunit and tpulse cancel out. This results in a very high accuracy and less dependency on variations of the bias current and capacitance.

**Claims**

1. Integrate-and-fire neuron circuit, at least comprising:

   - at least one input to receive input signals and at least a positive and a negative output to deliver positive and negative spike output signals,
   - a weighting subcircuit configured to generate and output positive and/or negative charge packets to a common line based on the input signals and stored weights,

- a capacitance (Cmem) between the common line and a reference potential (Vref) or an integrator, said capacitance (Cmem) or integrator storing the charges of the positive and negative charge packets and converting the sum of charges into a voltage (Vmem),
- a first comparator (CompU) comparing said voltage (Vmem) against an upper reference voltage (VRefU) and configured to generate the positive spike output signals at the positive output, while said voltage (Vmem) is larger than the upper reference voltage (VRefU),
- a second comparator (CompL) comparing said voltage (Vmem) against a lower reference voltage (VRefL) and configured to generate the negative spike output signals at the negative output, while said voltage (Vmem) is smaller than the lower reference voltage (VRefL), and
- a feedback subcircuit connected to the positive and negative outputs and configured to generate and output positive charge packets to the common line based on each negative spike output signal and stored weights and to generate and output negative charge packets to the common line based on each positive spike output signal and stored weights.

2. Integrate-and-fire neuron circuit according to claim 1, **characterized in that** the weighting subcircuit comprises

- at least one or a multiplicity of first positive analog weight emulators (P-AWE) each configured to generate and output a positive charge packet to the common line when enabled by a first enabling signal in combination with an additional enabling signal,
- at least one or a multiplicity of first negative analog weight emulators (N-AWE) each configured to generate and output a negative charge packet to the common line when enabled by a first enabling signal in combination with an additional enabling signal, and
- an input signal interface which receives the input signals and generates the first enabling signals, based on the input signals, for the first positive and negative analog weight emulators (P-AWE, N-AWE).

3. Integrate-and-fire neuron circuit according to claim 2, **characterized in that** the feedback subcircuit comprises

- at least one or a multiplicity of second positive analog weight emulators (P-AWE) each configured to generate and output a positive charge packet to the common line when enabled by a second enabling signal in combination with an additional enabling signal,
- at least one or a multiplicity of second negative analog weight emulators (N-AWE) each configured to generate and output a negative charge packet to the common line when enabled by a second enabling signal in combination with an additional enabling signal, and
- a feedback signal interface connected to the positive and negative outputs and configured to generate the second enabling signals for the second positive analog weight emulators (P-AWE) based on each negative spike output signal, and to generate the second enabling signals for the second negative analog weight emulators (N-AWE) based on each positive spike output signal.

4. Integrate-and-fire neuron circuit according to claim 2 or claim 3, **characterized in that** the first and/or second positive and negative analog weight emulators (P-AWE, N-AWE) each having a memory or being connected to a memory storing weights and/or holding additional enabling data.

5. Integrate-and-fire neuron circuit according to one or more of claims 2 to 4, **characterized in that** the first and/or second positive and negative analog weight emulators (P-AWE, N-AWE) each comprise a switched current source for generating the charge packets.

6. Integrate-and-fire neuron circuit according to claim 5, **characterized in that** the circuit comprises a common bias circuit to bias the switched current sources of at least one of the first and second positive and negative analog weight emulators (P-AWE, N-AWE).

7. Integrate-and-fire neuron circuit according to one or several of claims 1 to 6, **characterized in that** the circuit comprises a reference voltage generator to generate the reference potential (Vref), the upper reference voltage (VRefU) and the lower reference voltage (VRefL) using positive and negative analog weight emulators and capacitors.

8. Integrate-and-fire neuron circuit according to one or several of claims 1 to 7,
   **characterized in that**
   the circuit includes an offset subcircuit comprising

   - at least one or a multiplicity of third positive analog weight emulators (P-AWE) each configured to generate and output a positive charge packet to the common line when enabled by a third enabling signal in combination with an additional enabling signal,
   - at least one or a multiplicity of third negative analog weight emulators (N-AWE) each configured to generate and output a negative charge packet to the common line when enabled by a third enabling signal in combination with an additional enabling signal, and
   - a digital spike generator connected to the third positive and negative analog weight emulators (P-AWE, N-AWE) and generating digital spike signals based on a received digital offset value, said digital spike signals representing the third enabling signals for the third positive and negative analog weight emulators (P-AWE, N-AWE).

9. Integrate-and-fire neuron circuit according to one or several of claims 2 to 8,
   **characterized in that**
   the first and second positive analog weight emulators are formed identically, the first and second negative analog weight emulators are formed identically and the positive and negative analog weight emulators are formed in complementary manner to achieve structural matching.

10. Integrate-and-fire neuron circuit according to one or several of claims 1 to 9,
    **characterized in that**
    the capacitance (Cmem) is formed of a capacitor connected between the common line and the reference potential (Vref) or at least one supply line.

11. Integrate-and-fire neuron circuit according to claim 10,
    **characterized in that**
    said capacitor is configured to be modified in size by a digital value stored in an additional memory.

12. Integrate-and-fire neuron circuit according to one or several of claims 1 to 11,
    **characterized in that** a resistor can be switched in parallel to the capacitance (Cmem) to implement a controlled leaky behavior.

13. Integrate-and-fire neuron circuit according to claim 12,
    **characterized in that**
    said resistor is implemented using switched capacitors.

14. Integrate-and-fire neuron circuit according to one or several of claims 1 to 13,
    **characterized in that** a switch is arranged between the common line and the reference potential (Vref)allowing to set the common line to the reference potential (Vref) when activated by at least one inhibitory input or a reset input.

Fig. 1

Fig. 2

Fig. 3

| | Europäisches Patentamt European Patent Office Office européen des brevets | **EUROPEAN SEARCH REPORT** | **Application Number** EP 22 18 6414 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | RAFAEL SERRANO-GOTARREDONA ET AL: "A Neuromorphic Cortical-Layer Microchip for Spike-Based Event Processing Vision Systems", IEEE TRANSACTIONS ON CIRCUITS AND SYSTEMS PART I: REGULAR PAPERS, IEEE SERVICE CENTER, NEW YORK, NY, US, vol. 53, no. 12, 11 December 2006 (2006-12-11), pages 2548-2566, XP011151644, ISSN: 1057-7122, DOI: 10.1109/TCSI.2006.883843 * sections I, III; figures 2, 5 * | 1-14 | INV. G06N3/065 G06N3/049 |
| A | BODO RUECKAUER ET AL: "Conversion of Continuous-Valued Deep Networks to Efficient Event-Driven Networks for Image Classification", FRONTIERS IN NEUROSCIENCE, vol. 11, 7 December 2017 (2017-12-07), XP055570440, CH ISSN: 1662-4548, DOI: 10.3389/fnins.2017.00682 * Sections 2.1.1 * | 1-14 | |
| A,D | EP 2 877 958 B1 (HRL LAB LLC [US]) 4 September 2019 (2019-09-04) * 24; figure 4A * | 1-14 | TECHNICAL FIELDS SEARCHED (IPC) G06N |

-/--

The present search report has been drawn up for all claims

| Place of search | Date of completion of the search | Examiner |
|---|---|---|
| The Hague | 26 January 2023 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIANG YU ET AL: "Constructing Accurate and Efficient Deep Spiking Neural Networks with Double-threshold and Augmented Schemes", ARXIV.ORG, CORNELL UNIVERSITY LIBRARY, 201 OLIN LIBRARY CORNELL UNIVERSITY ITHACA, NY 14853, 5 May 2020 (2020-05-05), XP081670022, * section II.A; figure 1 * | 1-14 | |
| A | SIJIA LU ET AL: "Linear Leaky-Integrate-and-Fire Neuron Model Based Spiking Neural Networks and Its Mapping Relationship to Deep Neural Networks", ARXIV.ORG, CORNELL UNIVERSITY LIBRARY, 201 OLIN LIBRARY CORNELL UNIVERSITY ITHACA, NY 14853, 31 May 2022 (2022-05-31), XP091266824, * sections II.B, IV.A; figure 2 * | 1-14 | TECHNICAL FIELDS SEARCHED (IPC) |

The present search report has been drawn up for all claims

| Place of search | Date of completion of the search | Examiner |
|---|---|---|
| The Hague | 26 January 2023 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 6414

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2023

| Patent document cited in search report | | Publication date | Patent family member(s) | | Publication date |
|---|---|---|---|---|---|
| EP 2877958 | B1 | 04-09-2019 | CN | 104335224 A | 04-02-2015 |
| | | | EP | 2877958 A1 | 03-06-2015 |
| | | | US | 8975935 B1 | 10-03-2015 |
| | | | US | 2014032460 A1 | 30-01-2014 |
| | | | WO | 2014018078 A1 | 30-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2877958 B1

**Non-patent literature cited in the description**

- **R. SERRANO-GOTARREDONA et al.** A Neuromorphic Cortical-Layer Microchip for Spike-Based Event Processing Vision Systems. *IEEE Transactions on Circuits and Systems I: Regular Papers,* December 2006, vol. 53 (12), 2548-2566